# EUROPEAN PATENT SPECIFICATION

(11) **EP 1 046 244 B1**
(45) Date of publication and mention of the grant of the patent: **29.12.2010**
(21) Application number: 99903024.0
(22) Date of filing: 08.01.1999
(51) Int. Cl.: H04B 7/00, G06F 13/00, G06F 17/30, H04J 3/24

(54) **Mobile crew management system**
Verwaltungssystem für mobile Mannschaft
Système de gestion d'équipes mobiles

(30) Priority: 09.01.1998 US 70858 P
(43) Date of publication of application: 25.10.2000
(73) Proprietor: DRAKAR TOULE LTD.,, Wilmington DE 19808 (US)
(72) Inventor: KHALESSI, Amir, Cary, NC 27511 (US); ARDALAN, Sasan, Cary, NC 27511 (US)
(74) Representative: Ablett, Graham Keith
(86) International application number: PCT/US1999/000497
(87) International publication number: WO 1999/035549

(56) References cited:
- US-A- 5 159 592
- US-A- 5 553 083
- US-A- 5 655 219
- US-A- 5 657 317
- US-A- 5 752 246
- US-A- 5 774 660
- PATENT ABSTRACTS OF JAPAN vol. 1995, no. 11, 26 December 1995 (1995-12-26) & JP 07 209451 A (HITACHI LTD), 11 August 1995 (1995-08-11)

## Description

### FIELD OF THE INVENTION

This invention relates generally to management information systems and more particularly to automated systems and methods for work order assignment and field communication.

### BACKGROUND OF THE INVENTION

Businesses such as utility companies which deploy numerous employees over a wide geographic area to service a dispersed infrastructure or client base are faced with the particularly cumbersome task of communicating work assignments and related data to personnel that are dispersed in the field. For example, a utility company is faced with the daunting task of maintaining an infrastructure that spans a potentially very large geographic area. When outages occur in a utility grid, field personnel must be dispatched to address the problem. Typically, field personnel are already in the field when new service tasks or work orders are generated. Thus, utility companies are faced with the very complex task of receiving work orders, identifying field personnel that are best suited for the job as dictated by training, experience, and proximity to the work area, and communicating to field personnel that a particular work order has been assigned to them. In response, field personnel must communicate to the dispatching operator an acceptance or rejection of the work order. Furthermore, if a work order is accepted, it may be necessary to gather information and data regarding the work order. Such data may include for example the type of equipment that is to be serviced, the maintenance history of the particular equipment item, and information regarding other equipment in close proximity. Upon completion of the work order, field personnel are responsible for updating the central office with information on the status of the work order as well as any changes that may have been made to the infrastructure as a result of the work order. Of course other types of organizations such as delivery companies, facilities maintenance companies, and any other types of organization which must assign work and communicate data regarding those assignments to personnel already deployed in the service area are faced with similar problems.

Generally, field personnel and centralized dispatching operations communicate by two-way voice systems such as wireless phone or radio. Such systems allow for communication of voice and in some cases, with the advent of fax machines, data. But by either voice of fax, the amount and type of information that can be easily communicated to field personnel is limited. Indeed, while all of the relevant data necessary for completing a task may be located in a central office, very little of it can be communicated to field personnel. For this reason, field personnel carry with them information resources such as maps and data sheets. Unfortunately, these often quickly become outdated which can lead to a dangerous work environment for field personnel.

Of course, systems have previously been developed to facilitate work assignment and data communication. These systems, however, have used proprietary technology. Further, maintenance of prior systems typically has required manually updating individual nodes of the system through non-network means.

US patent 5,752,246 discloses a service agent for fulfilling requests of a web browser. In the solution disclosed a World Wide Web browser makes requests to web servers on a network which receive and fulfill requests as an agent of the browser client, organizing distributed sub-agents as distributed integration solution (DIS) servers on an intranet network supporting the web server which also has an access agent servers accessible over the Internet. DIS servers execute selected capsule objects which perform programmable functions upon a received command from a web server control program agent for retrieving, from a database gateway coupled to a plurality of database resources upon a single request made from a Hypertext document, requested information from multiple data bases located at different types of databases geographically dispersed, performing calculations, formatting, and other services prior to reporting to the web browser or to other locations, in a selected format, as in a display, fax, printer, and to customer installations or to TV video subscribers, with account tracking.

US patent 5,159,592 discloses an apparatus and method for managing bidirectional transmission of information between a wired network and at least one mobile communication unit in wireless communication with the wired network. The wired network is of the type wherein users of the network are each assigned a unique network address. A local gateway is coupled between a wireless LAN and the wired network for communicating with a mobile communication unit, and a global gateway is coupled to the local gateway and to remote users of the network. The global gateway functions to maintain a plurality of network addresses and, in response to a request for an assignment of a network address from the mobile communication unit, assigns one of the plurality of network addresses to the requesting mobile communication unit. The global gateway also buffers and routes data received from a remote user, the data being directed to an address corresponding to the assigned network address, to the mobile communication unit having the assigned address.

Although these existing systems are useful, there is a need for more advanced two way data communication between field personnel and a central office. In particular, there is a need for a system whereby tasks can be assigned and automatically communicated to field personnel with little or no dispatcher intervention. Field personnel should be able to access on-line the most up-to-date data related to the work order. Additionally, there is a need for a system whereby field personnel are able to update system records to reflect physical changes resulting from their work as well as update system records to reflect changed work order status. Furthermore, such a system should use non-proprietary technologies and be easily maintained.

### SUMMARY OF THE INVENTION

Briefly, the present invention provides a system for assigning work orders, communicating work orders to deployed field personnel, and communicating at the request of field personnel, up-to-date data related to an assigned work order. The system comprises an enterprise computing system, a mobile field unit, and wireless communication network which supports terminal control protocol/internet protocol (TCP/IP). The enterprise computing network comprises application programs through which work orders may be assigned and managed, various server machines containing data related to the work orders, a local area network (LAN) connecting the server machines, and a gateway to the TCP/IP wireless network. A mobile field unit comprises a computing device and modem for communicating over the wireless network to the enterprise computing system. A mobile field unit and each machine in the enterprise computing system has a unique IP address assigned to it. Accordingly, commands and data can be communicated freely between all machines.

According to another aspect of the invention there is provided a method for managing work order assignments. There is also disclosed a method for distributing map data. According to still another aspect of the invention there is provided a method for monitoring communications in the system.

### BRIEF DESCRIPTION OF THE DRAWINGS

Other features of the invention are further apparent from the following detailed description of presently preferred exemplary embodiments of the invention taken in conjunction with the accompanying drawings, of which:
Figure 1 is a schematic diagram of a system in accordance with the present invention;
Figure 2 is a diagram of software components of a system in accordance with the present invention;
Figure 3 is a flow diagram of process in accordance with the present invention for assigning a work order to a field crew;
Figure 4 is diagram of software components and data flows in a system in accordance with the present invention;
Figure 5 is a flow diagram of a process in accordance with the present invention for distributing work order assignment data to a field crew having a mobile field unit;
Figure 6 is a flow diagram of a process in accordance with the present invention for notifying the field crew of an assignment;
Figure 7 is a flow diagram of a process in accordance with the present invention for verifying the field crew identity;
Figure 8 is a flow diagram of a process in accordance with the present invention for notifying the field crew of a successful login;
Figure 9 is a flow diagram of a process in accordance with the present invention for retrieving and presenting a list of assignments to the field crew;
Figure 10 is an illustration of an exemplary screen showing a list of work order assignments that have been assigned to a field crew;
Figure 11 is an illustration of an exemplary screen for displaying detailed assignment data;
Figure 12 is a flow diagram of a process in accordance with the present invention for retrieving detailed assignment data for a selected assignment;
Figure 13 is an illustration of an exemplary screen for entering data related to the cause of an outage;
Figure 14 is a flow diagram of a process in accordance with the present invention for updating assignment data in response to an action taken by a field crew;
Figure 15 is an illustration of an exemplary screen for displaying map data;
Figure 16 is a flow diagram of a process in accordance with the present invention for gathering and displaying map data;
Figure 17 is a schematic diagram of a system in accordance with the present invention in communication with a paging system and a digital personal communication system; and
Figure 18 is a flow diagram of a process in accordance with the present invention for monitoring work order assignment.

### DETAILED DESCRIPTION OF PREFERRED EMBODIMENT

The present invention provides a multi-crew management system. More particularly the management system is an automated system for the distribution of work orders and related materials to field personnel dispersed over a wide geographic area. A work order, which may be any type of description of a particular task, are assigned using a centralized enterprise computing system and are communicated over a wireless network to field personnel having mobile computing units. Field personnel can use a mobile field unit to access the enterprise computing system and gather information about the work order as well as to update the enterprise computing system with details regarding the status of the work order. Thus, a system in accordance with the present invention provides two-way communication and work order automation with minimum dispatcher/operator interference.

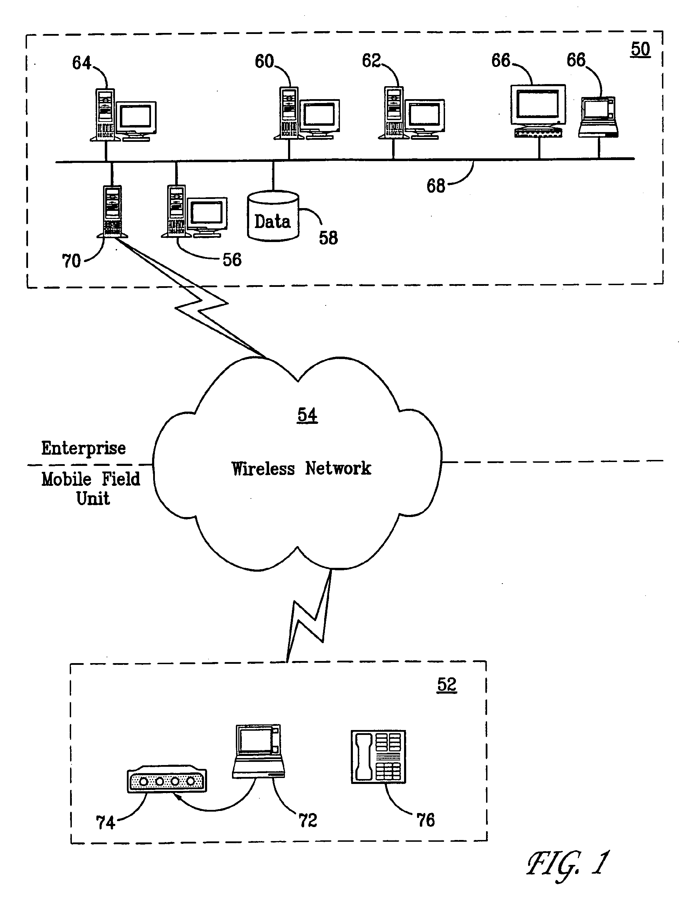

Figure 1 graphically depicts a system in accordance with the invention. As shown, the inventive system comprises enterprise computing system 50, mobile field unit 52, and wireless communication network 54 operably connecting the two.

Enterprise computing system 50 may comprise database servers 56 for fielding requests to data stored in database 58, hypertext transfer protocol (HTTP) servers 60 for fielding requests for web page data, monitoring server 62 for accepting and providing data regarding the status of work orders, and file servers 64. While each of servers 56, 60, 62, and 64 is represented by a separate machine in Figure 1, in some embodiments of the enterprise system a single machine may be configured to perform all of these operations. An enterprise computing system may also comprise workstations 66 from which various application programs may be accessed. Servers 56, 60, 62, and 64 and workstations 66 are interconnected through an Ethernet local area network (LAN) 68. LAN 68 supports TCP/IP and each of machines 56, 60, 62, 64 and 66 is uniquely identified with an IP address. Gateway 70 provides a communication connection between LAN 68 and wireless TCP/IP network 54.

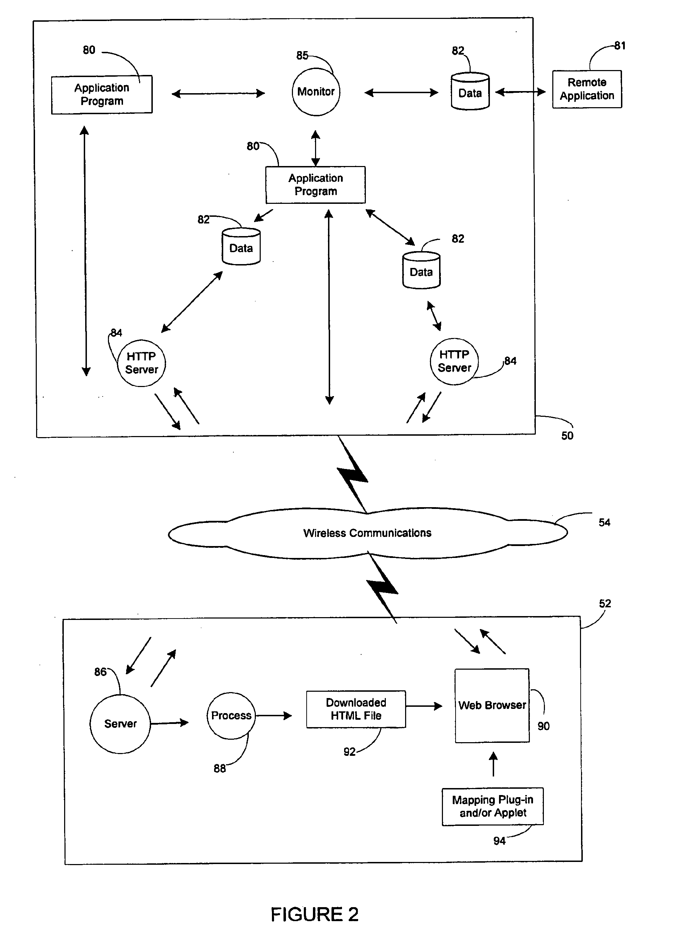

In a typical application of the inventive system, enterprise computing system 50 is located at a central office or operations center. As is explained in greater detail below with reference to Figure 2, work orders are processed and input to the enterprise computing system using any one of several application programs. Data which field personnel may require to complete their assigned tasks is located on servers 56, 60, 62, and 64 and may be accessed by field personnel using mobile field unit 52.

Mobile field unit 52 comprises computing device 72 which may be a portable computer, a personal digital assistant (PDA), or similar device. Typically computing device 72 comprises random access memory (RAM), web browser software for internet and intranet communications, and an interactive display mechanism. Computing device 72 may also include: storage capability (flash or electro-mechanical), a serial interface, an audio playback device, and software to support a TCP/IP protocol stack and point-to-point protocol (PPP).

Mobile field unit 72 may also comprise wireless radio modem 74. Wireless radio modem 74 provides a means for communicating over wireless network 54 between computing device 72 and enterprise computing system 50. Wireless radio modem 74 supports PPP protocol and TCP/IP protocol over wireless radio network 54. Wireless radio modem 74 may be internal or external to computing device 72.

Mobile field unit 52 optionally may comprise a wireless two-way voice communication device 76. Device 76 may be integrated with computing device 72 or may be a separate radio device, cellular phone, or digital cellular phone.

Each field crew is assigned a mobile field unit 52. Thus, although only one is shown in Figure 1, numerous mobile field units 52 may be deployed and operating at once. As noted, each mobile field unit 52 has an IP address assigned to it. Further, enterprise computing system 50 comprises a database of entries indicating for each field unit, the field crew which has the unit. Thus, when a work order is assigned to a particular field crew, the inventive system automatically routes the appropriate commands and data as described below to the appropriate mobile field unit 52. Field crews are free to access enterprise computing system 50 to gather data that may be helpful in completing the assigned work order.

Wireless radio network 54 provides TCP/IP communication between enterprise computing system 50 and mobile computing device 52. As previously noted, each mobile field unit 52 is given a unique IP address. Similarly, machines on enterprise computing network 50 are given a unique IP. Because wireless radio network 54 supports TCP/IP, routing of data and commands between mobile field units 52 and enterprise computing system 50-can be accomplished by existing network techniques. Further, mobile field units 52 can be arranged into various network configurations such as subnets and intranets and in theory, if the appropriate gateways are arranged, can be accessed via the Internet.

IP addressing allows for commands to be routed to, and data accessed from any machine in the network. Thus, data and/or a command may be transmitted via gateway 70 to wireless radio network 54 and delivered at any particular mobile field unit 52. Similarly, data and/or a command may be transmitted from mobile computing device 52 via modem 74 to wireless network 54 which delivers the data and/or command to a particular machine designated by a unique IP address on enterprise computing system 50.

Preferably, wireless network 50 employs native TCP/IP. However, any network type may be employed provided it can be adapted to support TCP/IP. Thus, wireless network 54 may be any of the following network types: a CDPD public network (packet-switched); a radio packet-switched network (adapted for TCP/IP); a tariff/non-tariff-based network; or a Personal Communication Systems network(circuit-switched). A system in accordance with the invention can be implemented at any location that one of these network types exists.

Cellular Digital Packet Data (CDPD) is an open standard public network. In one embodiment of the present invention, modem 74 is a CDPD modem which is assigned a unique 32 bit IP address. The IP address becomes the unique identifier associated with mobile field unit 52.

Typically, where CDPD networking technology is employed, network connection between mobile field unit 52 and enterprise computing system 50 can be maintained continuously. Thus, with a CDPD communications network, the connection between the enterprise system 50 and mobile field units 52 does not require call setup or dial-in/dial-out specifications. The transfer of data between enterprise system 50 and mobile field unit 52 is immediate or within seconds via a virtual TCP/IP circuit which maintains continuous two-way traffic across the CDPD packet-switched data system. Any data packet originating from either the enterprise system 50 or mobile field unit 52 is delivered almost immediately.

In an alternative embodiment, wireless network 54 may be a Personal Communications System (PCS) network. With a cellular network the communications can be either digital or analog across a circuit-switched data system. In a circuit-switched data system the connection between enterprise computing system 50 and mobile field unit 52 must be established via an initiation call. Thus, call setup and dial-in dial-out specifications are required to deliver or receive data. When a call is complete, the TCP/IP circuit is terminated and communication between enterprise system 50 and the mobile field unit 52 is unavailable. In an embodiment of the present inventive system where PCS communication is employed, analog modems may be deployed in both enterprise computing system 50 and mobile field units 52. The analog modems convert modulated digital data to be translated over the voice band of a cellular phone.

In still another embodiment of the present invention, wireless network 54 may comprise a radio (wireless) packet-switched network which does not support TCP/IP. Like TCP/IP-based CDPD communications, radio packet-switched networks can transmit and receive packet data anytime without call setup. These networks include both public proprietary data networks (e.g., ARDIS and RAM) and private radio networks (e.g., DATA TAC). However, because the inventive system relies upon TCP/IP, in order to employ such networks it is necessary to use third party equipment such as that provided by PADCOM Incorporated to allow such a network to support TCP/IP.

Enterprise computing system 50 and mobile field unit 52 comprise various software components. Figure 2 is a diagram of software components comprised in a system in accordance with the present invention. As shown, in enterprise computing system 50, numerous application program components or clients 80 may exist. Preferably these are written using the JAVA programming language so as to be operable on platforms running various operating systems. Each application 80 may serve a particular purpose with respect to managing work orders and monitoring the progress of those work orders. It should be noted that there may be multiple instances of the same application 80 running at any one time. Furthermore, remote applications 81 from outside system 50 may also occasionally access system resources.

Enterprise computing system 50 also comprises database server software 82 which may be, for example, an Oracle database server. Indeed, there may be multiple databases 82 in one system 50. Database server software 82 manages work order data as well as other business related data. For example, in the case of a utility, databases 82 might comprise detailed equipment data and map data.

Enterprise computing system further comprises HTTP servers 84 which may be, for example, a Netscape or Apache HTTP server. HTTP servers 84 are operable to field requests from all machines but particularly from web browsers located in mobile field unit 52. HTTP servers 84 are operable to launch or invoke stored procedures or common gateway interface programs (CGI) to implement actions initiated by field crew members at mobile field unit 52. The CGI is a mechanism which allows data to be transferred from a browser to a program residing on the server via the HTTP server such that the program processes the data (usually parameters) and can deliver results back to the browser via the HTTP server. It should be noted that by invoking stored procedures it is meant that HTTP server 84 which has been delivered the name of a stored procedure within a database, can cause the stored procedure to execute via an intermediate program passing it parameters. The stored procedure can generate data which it can deliver to a program such as a web browser via HTTP server 84. The stored procedure typically accesses database tables.

Monitor server software 85 accepts updates from applications 80 indicating that a work order has been assigned. Monitor server software 85 also accepts updates as to whether the work order was received at field unit 52 and whether it was accepted by the field crew. Monitor server 85 also provides a report generation feature.

Mobile field unit 52 comprises mobile server application 86. Mobil server application 86 services requests from enterprise computing system 50 to mobile field unit 52. In a preferred embodiment, mobile server 86 is written in the JAVA programming language which allows for mobile server 86 to run on numerous hardware platforms running various operating systems such as Windows, Mac OS, or Unix. Mobile server 86 is multi-threaded meaning it listens for requests and upon receipt of an input, spawns process 88 to react to the input. In this way, mobile server 86 can continue to listen for additional requests.

Mobile field unit 52 also comprises web browser 90 which may be loaded with files 92 that are downloaded from enterprise computing system 50. Web browser enhancer 94 is loaded by web browser 90 to display maps and related data. Web browser enhancer 94 may be a plug-in that is initially stored on mobile field unit 52. Alternatively, web browser enhancer 94 may be an Applet that is downloaded from enterprise computing system 50.

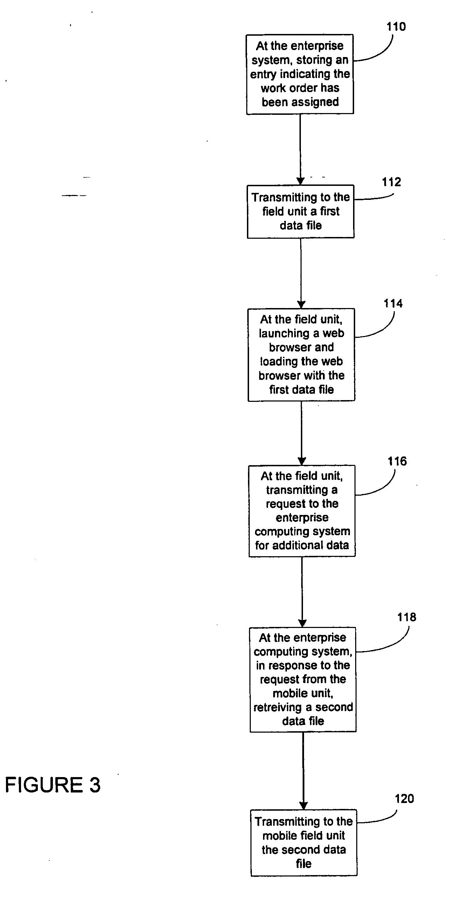

Typically operations in a system in accordance with the present invention are initiated at one of application programs 80. For example, a work order may be assigned to a particular field crew using application program 80. Figure 3 is a high-level flow chart of the process of making a work order assignment to a field crew having a mobile field unit 52. Generally, an operator at enterprise computing system 50 employs application program 80 to assign a work order or task to a particular field crew. As shown, at step 110 an entry indicating that a work order or task has been assigned to the field crew is entered in database 82. At step 112 data file 92 related to the work order along with a command to launch a web browser are transmitted to field unit 52. At step 114 mobile field unit 52 launches web browser 90 and loads web browser 90 with data file 92 which causes a web page to be displayed. In response to input from field personnel such as pointing and clicking on links in the displayed web page, at step 116 mobile field unit 52 transmits to enterprise computing system 50 a request for additional data regarding the work order. At step 118 enterprise computing system 50 retrieves the requested data, usually in the form of a data file. At step 120 the retrieved data is transmitted to mobile field unit 52.

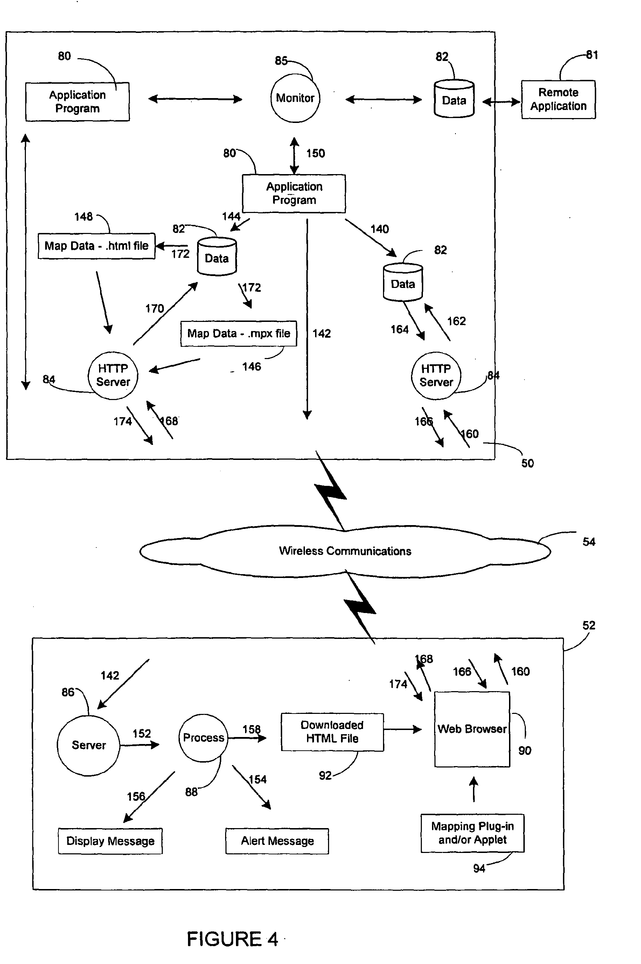

Figure 4 depicts various command and data flows that may be implemented in a system in accordance with the present invention when a work order is assigned to a field crew. Typically, work orders are assigned by personnel at enterprise computing system 50 using application program 80. In response, application program 80 requests, as represented by arrow 140, that database 82 be updated to reflect that the work order has been created. Generally, when a work order is created it is assigned a unique identifier in database 82. Thereafter, application program 80 establishes a TCP/IP connection with mobile server 86 and transmits a command to mobile server 86 (arrow 142). Simultaneously, a command may be issued (arrow 144) by application program 80 to database 82 directing the generation of map related data corresponding to the work order.

In one embodiment, the map related data comprises two files of mapping data. A first file 146 is in ASCII format and comprises map data in vector format. Typically the file is given a name ending in .mpx. The file extension .mpx identifies the file as a MIME type. As explained below, upon receipt of a file with the .mpx extension, web browser 90 is programmed to load plug-in 94 and display the map data contained therein in a map area of web browser 90..Mpx file 146 comprises unique identifiers for select objects that are displayed on the map. For example, a unique device identifier for a transformer may be included in .mpx file 146. Using these unique identifiers, when a crew member clicks on an object in the map, detailed data regarding the particular device can be retrieved from database 82.

An exemplary portion of ".mpx" file 146 is listed below:

| | | | | | | |
|---|---|---|---|---|---|---|
| 5 | 18 | 1075553 | 1082844 | 0 | U36864 | 36864 |
| 5 | 18 | 1071543 | 1082969 | 0 | U27824 | 27824 |
| 5 | 18 | 1072568 | 1083014 | 0 | U27825 | 27825 |
| 5 | 18 | 1076096 | 1084066 | 0 | U27826 | 27826 |
| 5 | 18 | 1082774 | 1084547 | 0 | U27829 | 27829 |
| 5 | 18 | 1077940 | 1085438 | 1 | U27828 | 27828 |

According to a preferred embodiment of the invention, each line in ".mpx" file 146 represents a map object to be displayed. Each line is formatted into seven columns. The first column designates the map object type. For example, type 5 represents an electrical network object. The second column identifies the type of electrical network object. For example, an electrical object may be a fuse transformers. The third and fourth columns represent the state plane coordinates of the object. The fifth column represents the state of the device, for example, open or closed. The sixth column identifies the unique device identifier. This unique identifier when combined with the uniform resource locator parameter which as explained below is stored in file 148, allows mapping plug-in 94 to request more detailed data regarding a selected device as well as change the state of the device. The seventh column is an identifier used to speed up the device lookup process.

A second file 148 is generated and formatted in HTML. HTML file 148 contains parameters which are used to configure ) plug-in 94. A first parameter sets the uniform resource locator (URL) for HTTP server 84 and the specifies the common gateway interface (CGI), or alternatively the stored procedure, which should be invoked when a user clicks on a device or map object that is displayed on the map. A second parameter enables or disables the ability for a crew to obtain information about an object. Other parameters control the display of the land base map data as well as control other settings.

An exemplary html file 148 is listed below:

```
 <HTML><HEAD>
 <TITLE>MAP Plugin</TITLE>
 </HEAD>
 <BODY>
 <H3> CADOPS Plugin </H3>
 <EMBED SRC="5979 map.mpx"
 device_url="http://abb.vnet.net/ast/owa/getobj_dl"
 enable_mobile_cadops=1 fixed=1 width=750 height=450
 minx=1068940 miny=1076438 maxx=1086940 maxy=1094438
 curvetype="map"></EMBED>
 <H5> outage: 5979</H5>
 <H3>CADOPS-WEBMAP </H3>
 <H45> ABB Distribution Information Systems, all rights
 reserved co1998 </H45>
 </BODY>
 </HTML>
```

In the above example, the object URL is specified by the "device_url" parameter. Note that the EMBED tag specifies the ".mpx" file 146 as 5979_map.mpx. This file is delivered to web browser 90 and ultimately to plug-in 94 for display.

The unique identifier for the work order to which the map data relates is embedded in the names of both files 146 and 148. This facilitates the later retrieval of these files. Application program 80 also requests that monitoring server 85 update records in database 82 to indicate that a particular work order has been transmitted to mobile unit 52 (arrow 150).

At mobile field unit 52, mobile server 86 spawns (arrow 152) process 88 to respond to the command from application program 80. In response to a command that a new work order has been assigned to the field crew, process 88 may cause an alert sound to be broadcasted (arrow 154). Thereafter or simultaneously, an alert message may be automatically displayed on the display of the mobile field unit 52 (arrow 156) to further alert the field crew. Process 88 launches web browser 90 (arrow 158) and loads web browser 90 with data, usually in the form of an HTML file 92 that was downloaded from application program 80 with the initial command.

Typically, downloaded html file 92 which is displayed in web browser 90 has web links to data stored in enterprise computing system 50. Thus, when field crew personnel click on a link in web browser 90, a request, preferably in the form of a HTTP post or get command (arrow 160) is made of HTTP server 84 in enterprise computing system 50. In response, HTTP server 84 queries, preferably by way of a stored procedure (arrow 162) database 82 for the requested data. Database 82 returns (arrow 164) the requested data to ) HTTP server 84, and HTTP server transmits 84 (arrow 166) the requested data to web browser 90. In a preferred embodiment, database 82 returns the data in HTML format.

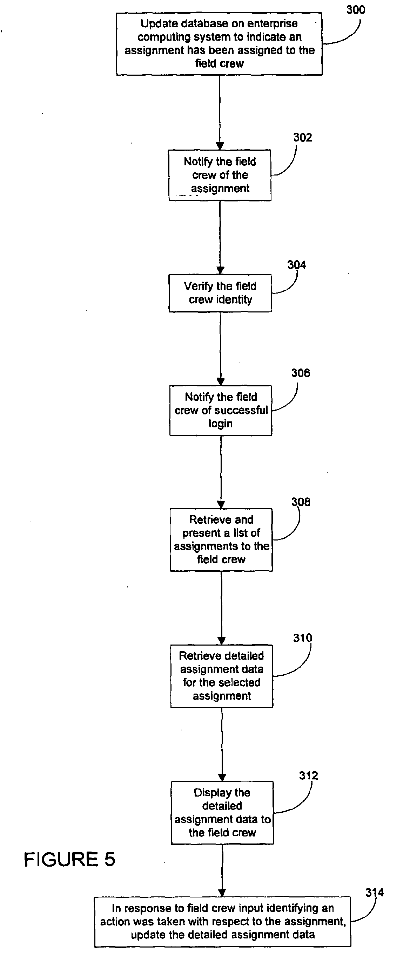

Figure 5 provides a flow chart depiction of a scenario for using the system of Figures 1 through 5 to distribute work order assignment data to a field crew having a mobile field unit. As shown, at step 300 database 82 is updated using application program 80 to indicate a work order has been assigned to a particular field crew. At step 302 the field crew is notified of the assignment via mobile field ) unit 52. In response to login data input by the field crew, at step 304 the identity of the field crew is verified against database 82 of enterprise computing system 50. At step 306 a notification is made to the field crew via field unit 52 if the login was successful. At step 308 a list of assignments is retrieved and presented to the field crew. At step 310 in response to input by the field crew selecting an assignment from the list of assignments, detailed assignment data for the selected assignment is retrieved from database 82. At step 312 the detailed assignment data is displayed to ) the field crew via mobile field unit 52. At step 314 in response to field crew input identifying that an action was taken with regard to the assignment, the detailed assignment data is updated in database 82.

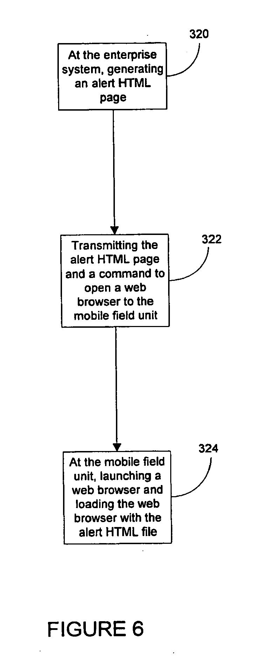

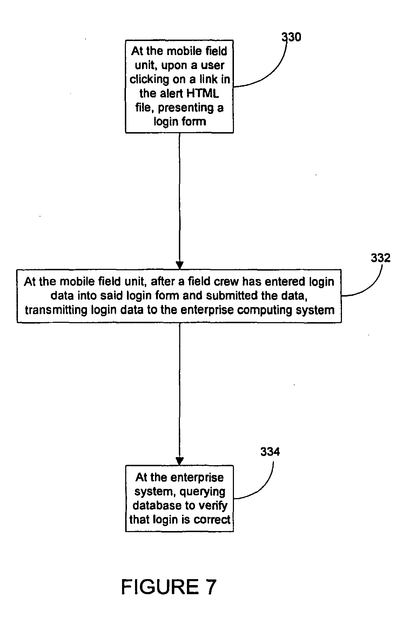

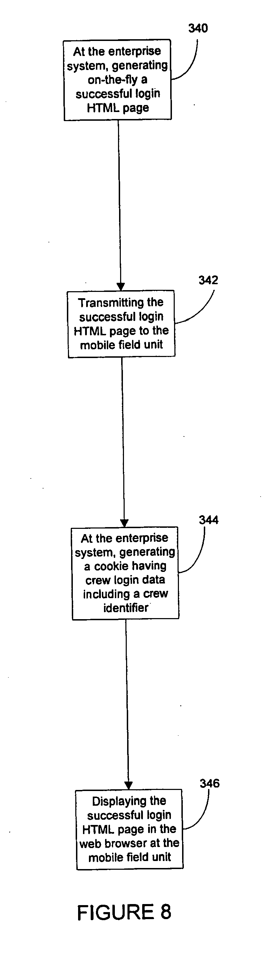

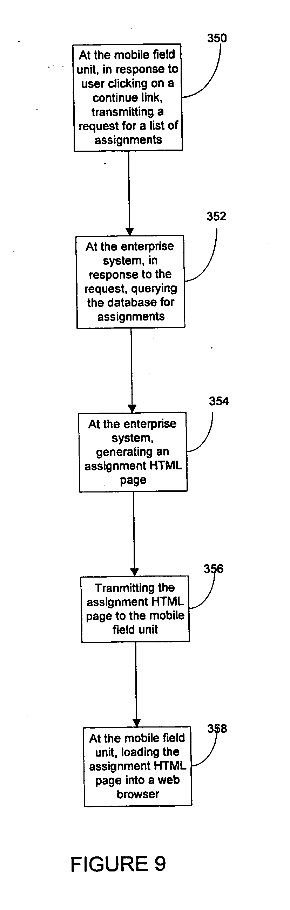

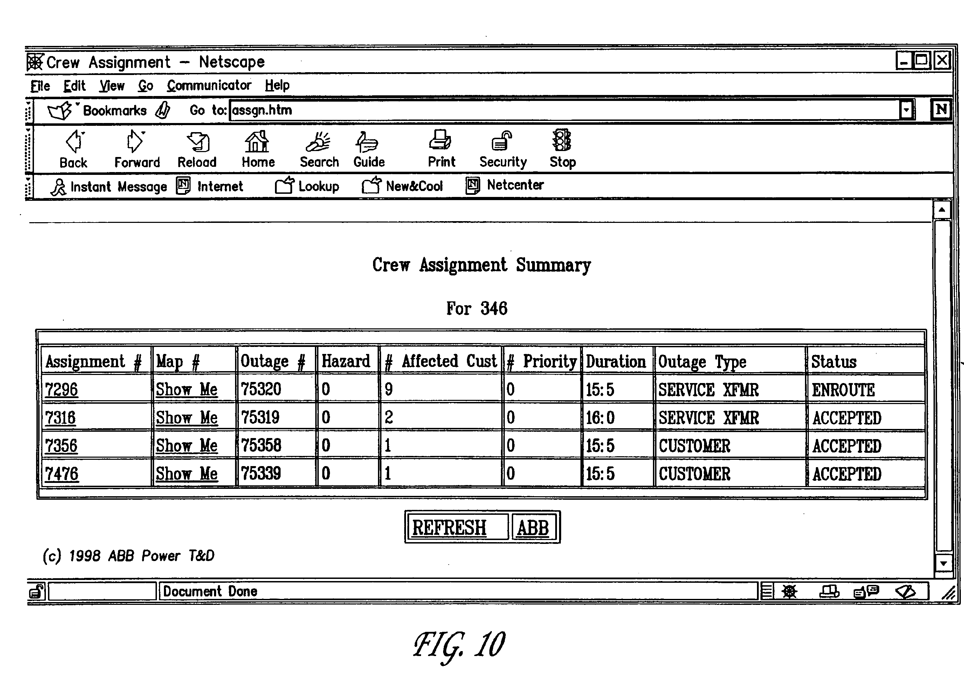

Figure 6 provides a detailed flow chart of step 302 of Figure 5 for notifying the field crew of the assignment. As shown at step 320 an "alert HTML page" is generated at the enterprise computing system in response to the assignment being assigned to the particular field crew. At step 322 the "alert HTML page" and a command to open a browser is transmitted from enterprise computing system 50 to mobile field unit 52. At step 324 web browser 90 is launched in response to the command and the "alert HTML page" is loaded into web browser 90. Figure 7 provides a detailed flow chart of step 304 of Figure 5 for verifying the field crew identity. At step 330 in response to a field crew member clicking on a link in the "alert HTML file," a login form is displayed. It should be noted that this link and the others that are described herein may comprise a URP and point to a specific application, for example a CGI or stored procedure which should be executed in response to clicking upon the link. The link may cause data, including web pages, to be retrieved from or updated in enterprise computing system 50. At step 332 in response to the field crew entering login data into the login form and submitting the login data, the login data is transmitted to enterprise computing system 50. At step 334 database 82 is queried to verify that the login data is correct. Figure 8 provides a detailed flow chart of step 306 for notifying the field crew of a successful login. At step 340 of Figure 8, a "success HTML page" indicating there has been a successful login is generated at the enterprise computing system. At step 342 the "success HTML page" is transmitted to the mobile field unit 52. At step 344 at enterprise computing system 50 a cookie is generated. The cookie contains data related to the field crew such as a unique field crew identifier. The cookie remains resident for a selected period of time so that upon subsequent accesses to the enterprise computing system 50 by the same field crew during the selected period of time, the field crew does not need to login again. Any programs, for example stored procedures which may require data such as the field crew identifier can obtain that information from the cookie. The cookie may be generated by a CGI that was initiated by HTTP server 84. At step 346 the "success HTML page" is displayed at mobile field unit 52 using web browser 90. The "success HTML page" has a "continue link" therein for continuing with the assignment distribution process. Figure 9 provides a detailed flow chart for step 308 of Figure 5 for retrieving and presenting a list of assignments to the field crew. At step 350, at mobile field unit 52, in response to a field crew member clicking on the "continue link" in the "success HTML page," a request is transmitted for a list of assignments. At step 352 at the enterprise computing system 50, database 82 is queried for assignments that have been assigned to the field crew. The field crew identifier, which may be retrieved from the cookie, is used in performing the query. At step 354 at enterprise computing system 50, an "assignment HTML page" is generated containing data comprising a list of assignments that have been assigned to the particular field crew. The "assignment HTML page" may be generated by a common gateway interface or a stored procedure invoked by an HTTP server. The "assignment HTML page" has "assignment links" to additional data in the database corresponding to each assignment. Each "assignment link" contains a unique identifier for the assignment which may be used in retrieving the additional assignment data from database 82. These "assignment links" may comprise a uniform resource locator (URL) for the server and program on enterprise computing system 50 that should be executed in order to retrieve the desired data. At step 356 the "assignment HTML page" is transmitted to the field crew via mobile field unit 52. At step 358 the "assignment HTML file" is loaded into web browser 90. Figure 10 provides an exemplary screen of the type that may be displayed upon loading of the "assignment. HTML page" into web browser 90.

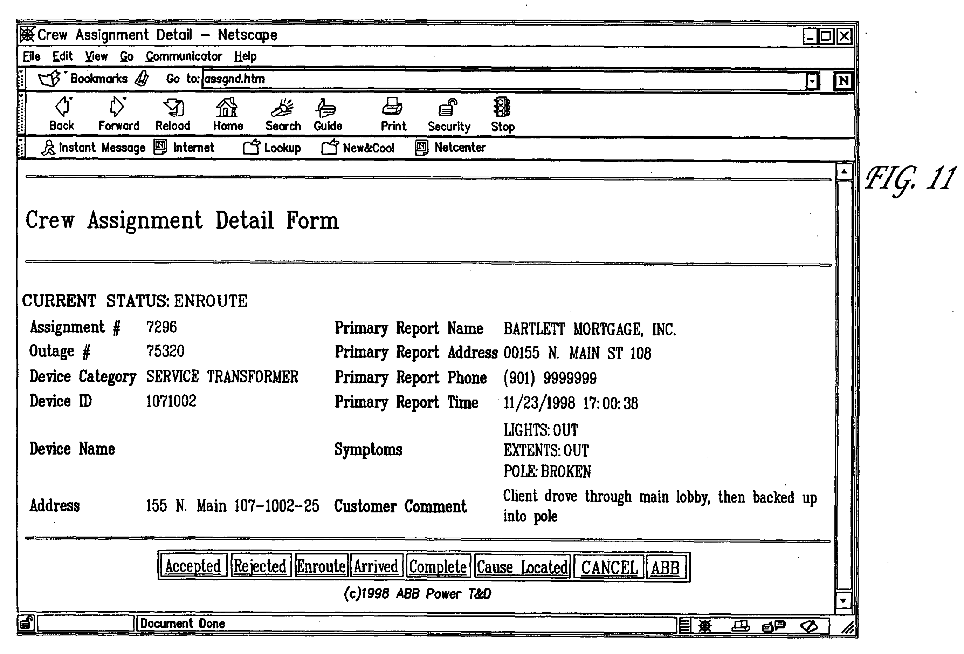

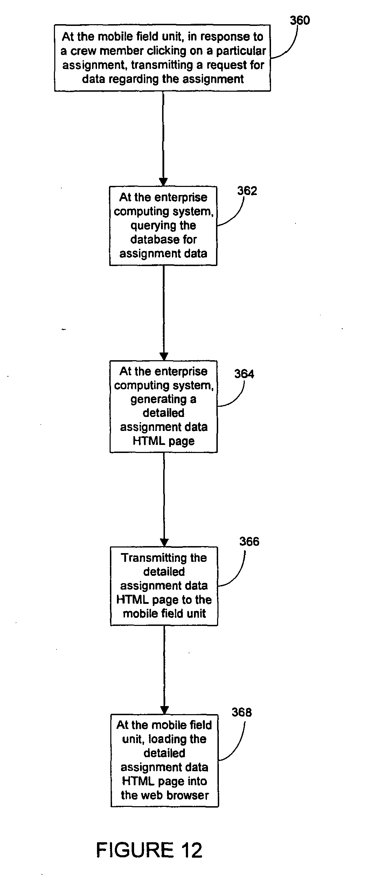

Figure 12 provides a detailed flow chart corresponding to step 310 of Figure 5 for retrieving detailed assignment data for the selected assignment. As shown, at step ,360 at the mobile field unit 52 in response to a crew member clicking on an "assignment link" in the assignment HTML page, a request for data related to the selected assignment is transmitted to enterprise computing system 50. At step 362 at the enterprise computing system 50 the database 82 is queried for assignment data related to the selected assignment. At step 364 at enterprise computing system 50 a "detailed assignment data HTML page" is generated. The "detailed assignment data HTML page" contains detailed data regarding the assignment that was selected previously by the field crew. An example of a displayed screen corresponding to a "detailed assignment data HTML page" is shown in Figure 11. The "detailed assignment data HTML page" contains a plurality of "HTML status links" each of which when clicked upon causes a different action to be taken relative to the data in database 82 that tracks the status of the particular assignment. "HTML status links." may contain a uniform resource locator and program name that implements the desired action in database 82. For example, one of the plurality of links may be an "accepted link" which when clicked upon causes the status data in the database to indicate the assignment has been accepted. One of the plurality of links might be an "enroute link" which when clicked upon causes the status data in the database to indicate the crew is enroute to the assignment location. A link might be a "completed link" which when clicked upon causes the status in the database to indicate the assignment has been completed. A link may be a "rejected link" which when clicked upon causes the status data in the database to indicate the assignment has been rejected by the field crew. A link may be an "arrived link" which when clicked upon causes the status data in the database to indicate the field crew has arrived in the assignment location. Still another link may be a "cancel link" which when clicked upon causes no change to the status data in the database but which may close the web page. It should be noted that the "detailed assignment data HTML page" may contain other links. For example, a "refresh link" may be available which when clicked upon causes the data on the page to be updated.

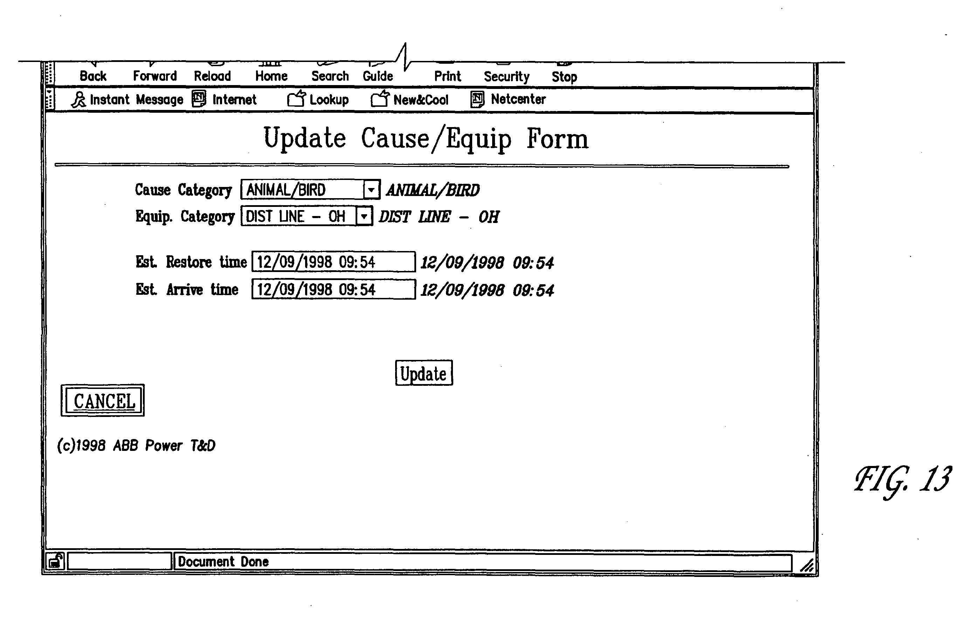

The "detailed assignment data HTML page" may also comprise a "cause locator" link. When the "cause locator" link is clicked upon, a CGI or stored procedure via HTTP server 84 is executed which generates a "cause HTML form." When the "cause HTML form" is delivered to the web browser, a cause/equipment pop-up menu is displayed. Figure 13 provides a view of an exemplary "cause HTML form" when displayed. This form allows field crew members to indicate the type of equipment that was damaged and the potential cause for the damage. The items listed in the cause or equipment categories are derived by querying database 82 on enterprise computing system 52. Thus, the items listed are not preloaded on the mobile field unit but are dynamically updated to fit the particular work order assignment. The "cause HTML form" also provides for the entry of related time information. In particular the form allows for entry of an estimated restore time and an estimated arrival time. When the mobile field crew completes and submits the "cause HTML form" the data is transferred to database 82. The database may be made available to a customer information system (CIS). Thus, customers may access the CIS and receive immediate notification of restore time. By this system and method, human element in communication is eliminated. The data is passed directly to the customer.

At step 366 the "detailed assignment data HTML page" is transmitted to mobile field unit 52. At step 368, which corresponds to step 312 of Figure 5, the "detailed assignment data HTML page" is loaded and displayed in web browser 90.

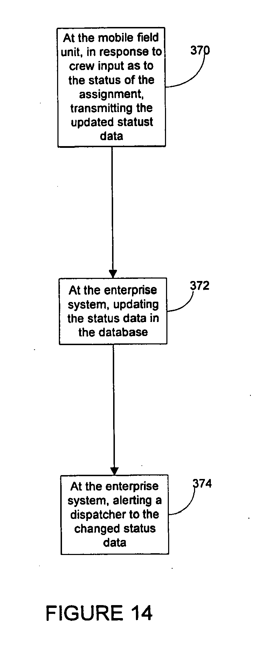

Figure 14 provides a detailed flow chart for step 314 of Figure 5 for updating the "detailed assignment data" which is detailed data regarding the assignment that a field crew may be working on. At step 370 at mobile field unit 52 in response to crew input as to the status of the assignment, updated "detailed assignment data" is transmitted to enterprise computing system 50. At step 372 at enterprise computing system 50 the "detailed assignment data" is updated in database 82 to reflect the change. At step 374 the dispatcher is alerted as to the change in status of the assignment. The alert may be a notification sound and/or a visual notification such as a dialog box.

It should be noted that in the processes described with reference to Figures 6 through 13, stored procedures may be used at the initiation of HTTP server 84 to query the database and take other actions with respect to the steps described above. Furthermore, a common gateway interface (CGI) script may alternatively be initiated by HTTP server 84 to perform many of these same operations. An HTTP server 84 and stored procedure/CGI for taking some action relative to the data in database 82 may be identified by a uniform resource locator that is stored in a web page link. The (CGI) script may be written in the PERL scripting language and may access database 82 using PERL database interface (DBI) and/or PERL database driver (DBD). Based upon the queries to the database, the PERL script can generate HTML on the fly and deliver it to a field crew's web browser 90 via HTTP server 84. The PERL script can also update database records via DBI/DBD.

For many work orders, a sub map of the assignment area can be of great value. For example, when responding to a power outage, a map can show both the land base and electrical network. The state of the electrical network and exact location of outages and faults can be shown on the map. Furthermore, according to the present invention, a crew member can click on objects in a map and obtain additional detailed information from enterprise computing system regarding that object.

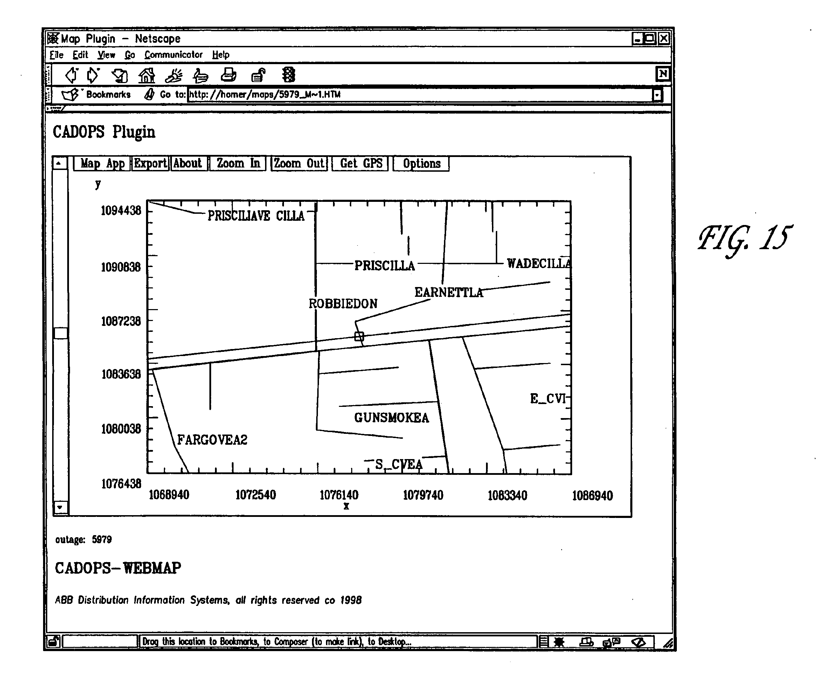

Referring back to Figure 4, a field crew member may request map data of the work order work area by clicking on a button or appropriate link displayed on web browser 90. Requests for map data are transmitted (arrow 168) to HTTP server 84 and include the unique identifier of the work order. Using this work order identifier, HTTP server requests (arrow 170) and receives (arrow 172) the map files 146 and 148 that were previously developed and whose names include the work order identifier. HTTP server 84 transmits (arrow 174) the map data to web browser 90. When web browser 90 receives and loads HTML file 148, it encounters a link to .mpx file 146. The link to file 146 signals web browser 90 to load plug-in 94 (arrow 176) and display the map data composed in .mpx file 146 in a map area of web browser 90. An exemplary screen with a map area of the type which might be displayed in web browser 90 is shown in Figure 15.

It should be noted that plug-in 94 can capture via web browser 90 all point and click events within the window area generated by the plug-in. This is important for handling requests for data on objects displayed in the map. Further, plug-in 94 is operable to execute an HTTP post or get command to HTTP servers 84 in enterprise computing system 50. Also, plug-in 94 maintains a linked list of all map objects displayed in the map along with the unique identifiers for those objects. Thus, when a map object is clicked upon, the unique identifier for the object is readily retrieved from the linked list.

Generally, the crew is free to interact with the map and obtain more information about the objects on the map by simply clicking on the particular map object. For example, a crew member may click on a transformer to obtain more information about the transformer. By clicking on the transformer, a new browser window is launched with a new HTML page comprising additional information regarding the transformer. For example, the new page may contain the make and model of the transformer as well as the maintenance history of the transformer. The new page may contain links to even further information regarding the transformer. For example, the HTML page may contain links to all network information about transformers of the same type and make. Directions to the transformer might also be displayed.

Generally, when a crew member clicks on a map object, plug-in 94 obtains the click event and the device coordinates of the point which was clicked upon. Plug-in 94 transforms the device coordinates to user coordinates (such as state plane coordinates) and searches for the nearest map object within its linked list to the point which was clicked. A dialog box is presented to the crew with the unique identifier for the device which corresponds to the map object selected. The crew is given the choice to request more information or to cancel the dialog. If the crew selects to see more detailed information, plug-in 94 retrieves the URL including the CGI that it obtained as a parameter from html file 148. Note that because the URL and CGI are parameters in html file 148 which is downloaded from enterprise computing system 50, the URL is not hard-coded on mobile field unit 52 and can vary by the map that is displayed. Indeed, different map files 146 and 148 may point to different resources at enterprise computing system 50.

Plug-in 94 attaches the unique object ID for the selected map object to the URL and CGI and submits an HTTP post or get command to HTTP server 84. Server 84 delivers the object ID to the CGI or database stored procedure. In either case, the program queries database 82 and generates an HTML file on the fly to be displayed in a new window in the crew's browser 90. The HTML may be a form or can contain links so that the crew can obtain further information. A link may also allow a crew to update the data related to a map object. For example a link may allow a field crew to indicate that a device corresponding to map object has been repaired, replaced, closed, opened, or removed. The ability to update the data in database 82 on-line greatly reduces paper work and provides for accurate and up-to-date records.

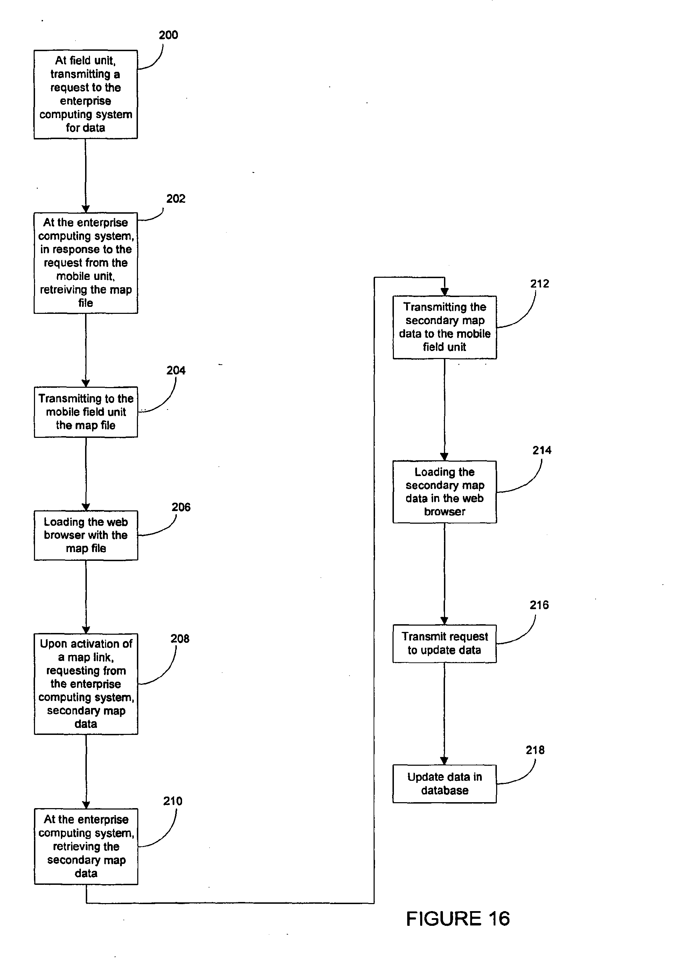

Figure 16 provides a flow chart of the process of gathering and displaying the map data in the present invention. As shown, at step 200 in response to a field crew member requesting a map for a particular work order, a request is transmitted from web browser 90 to HTTP server 84. At step 202 HTTP server 84 uses the work order identification number to retrieve map data corresponding to the work order. As noted above, in one embodiment of the invention, map data comprises two files, one in HTML format and one in an ASCII format. These files may contain links to secondary map data which comprises further information about objects composed in the map. At step 204 the map data is transmitted to web browser 90. At step 206 web browser 90 loads the map data, possibly using plug-in 94 so as to display a map to the crew personnel. In response to crew personnel clicking on a map object located in the displayed map, at step 208 web browser 90 transmits a request to HTTP server 84 for secondary map data related to a particular item on the map. At step 210 HTTP server 84 transmits a request to database 82 for the additional data. Database 82 processes the request and returns the requested data to HTTP server 84. HTTP server 84 transmits the secondary map data to web browser 90 at step 212. Web browser 90 loads the data in a browser window at step 214. It should be noted that the secondary map data may comprise an HTML file comprising a plurality of links for retrieval of still additional information or even updating data. This HTML file may be referred to as a "secondary map data retrieval file."

As noted above, field crews may change the physical equipment located in the field. According to the present invention, the field crew may also change the data in the system to reflect any changes that may have been made to the physical network. Thus, the field crew may enter data at web browser 90, possibly using the "secondary map data retrieval file." Thus, at step 216, the web browser transmits to HTTP server 84 a request to update database 82 in enterprise computing system 50. At step 218, HTTP server 84 forwards the request to database server 82 which updates the data to reflect the changes made by the field crew.

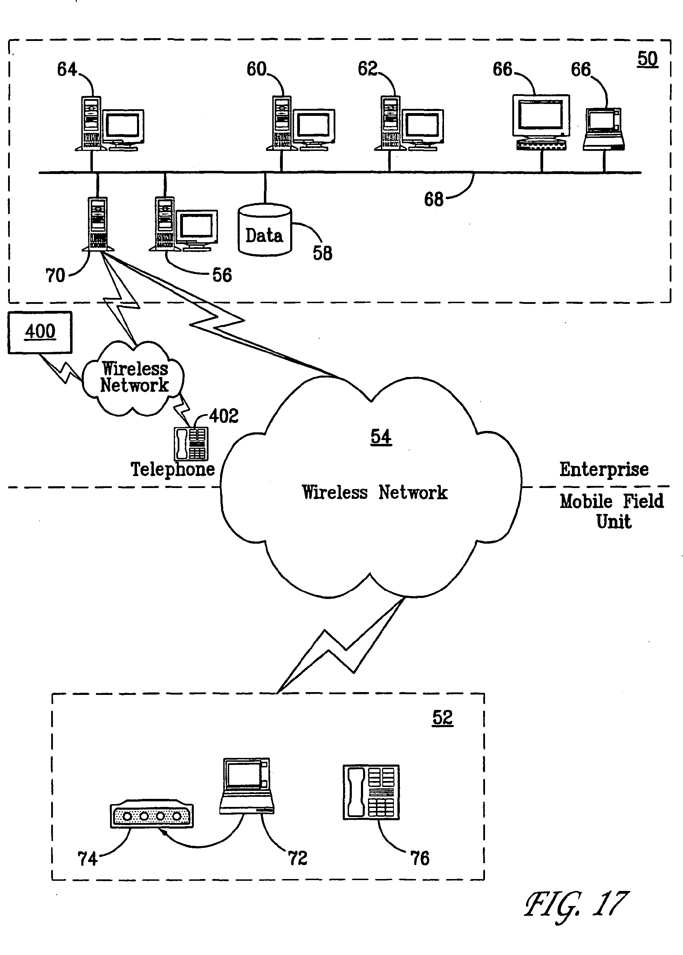

Another feature of the present invention involves monitoring of the assignment of work orders. When a work order is assigned to a field crew, the application through which the work order is being assigned not only connects to mobile field unit 52 but also transmits a packet of data to monitoring server 64 which comprises monitoring server software 85. Monitoring server 85 is updated to indicate whether a connection was successfully established with mobile server 86. A connection may not be established, for example, if mobile field unit 52 is out of range of wireless network 54. Monitoring server 85 stores an indication of whether a transmission was successful or not in database 82 or alternatively in a system file. Monitor server 85 may also send a notification, preferably via e-mail to a supervisor or dispatcher if a work order failed to successfully transmit to field unit 50. As shown in Figure 17, enterprise computing system might also be connected to a paging system 400 and/or a digital personal communication system 402. Thus, notification of a transmission failure may also be sent to a dispatcher from monitoring server by a page or a message via the PCS system. The notification step is necessary so that the dispatcher can resort to alternative means for communicating with the desired field crew. Applications can query the monitoring database 82 to obtain reports on the state of assignments (failures or acceptance) and to also obtain reports on the state of the wireless network.

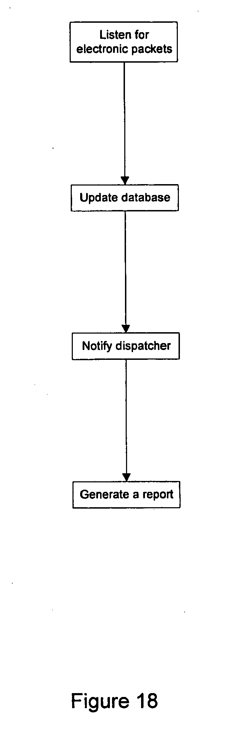

Figure 18 provides a flow chart of a method for monitoring work order assignment. At step 220, the server listens at specified internet protocol address for electronic packets comprising the status of the transmission of a work order to the mobile field unit. Generally, the electronic packets comprise a unique identifier for the work order, an indication of the time the status was recorded, and the internet protocol address of the relevant mobile field unit. Monitor server may be configured to receive either UDP or TCP packets. At step 222 an entry is made in database 82 indicating whether or not the work order has been successfully been transmitted. At step 224 the dispatcher is notified if the transmission was not successful. Upon receipt of a request for a report from an application program, at step 226 monitor server 85 processes the request and generates a report which may be transmitted to the requesting application.

It should be noted that there are numerous advantages to the systems and methods in accordance with the present invention. Foremost of these is that propriety code does not need to be developed and deployed on mobile field unit 52. For example, code for displaying information in a window or in dialog box is not proprietary. Rather, all graphical user interfaces are built using HTML generated dynamically by a CGI or stored procedures at enterprise computing system 50. Thus, there is no need to write complex closed proprietary code for each mobile field unit 52 when an interface is changed or different data needs to be presented.

Furthermore, in a system in accordance with the present invention application programs 80 generate dynamic HTML based on data and the desired presentation (which can include pop up menus, text fields, check boxes, selection boxes, etc). These dynamically created HTML files are thereafter delivered to the mobile field unit. Thus, changes made at enterprise computing system 50 are reflected immediately at mobile field unit 52. This greatly facilitates deployment of new user interfaces and applications to large numbers of field units 52.

Thus, as described above the present invention provides systems and methods for low-cost, timely, two-way communications between a central enterprise systems and geographically distributed field personnel. The system comprises an enterprise computing system, a wireless network, and a mobile field unit. Communications are TCP/IP-based and can be carried over a public or private network using a variety of communications technologies. Communication between the enterprise computing system and the mobile field unit is completely automated (voice communication is the exception). Although this unique system offers operator/dispatch functionality, the need for operator/dispatcher assistance is minimized. In addition, mobile field crews can access information resources at the central operations level including work order and mapped vehicle location data and other pertinent information.

While the invention has been described and illustrated with reference to specific embodiments, those skilled in the art will recognize that modification and variations may be made without departing from the principles of the invention as described above and set forth in the following claims. In particular, the present invention has been explained with reference to an exemplary utility environment but may be employed in other environments such as maintenance service corporations, ambulance services, public safety systems or any other operation which communicates work orders to field personnel. Accordingly, reference should be made to the appended claims as indicating the scope of the invention.

## Claims

1. A crew management system for distributing a work order to a geographically distributed field crew, comprising:
a wireless communication network (54);
an enterprise computing system (50) in communication with said wireless network (54), said enterprise computing system (50) operable to assign the work order to a field crew, issue a command related to the work order, and field requests for data related to the work order; and
a mobile field unit (52) in communication with said wireless network (54), said mobile field unit (52) operable to receive said command and the work order and operable to request from said enterprise computing system (50) data related to the work order, **characterized in that** said command comprises a file (92) of data related to the work order and a command to launch a web browser (90), said mobile field unit (52) in response to said command causing said web browser (90) to execute and load with said file (92) of data related to the work order.

2. The crew management system of claim 1, wherein said mobile field unit (52) comprises a display for displaying information, server software for receiving and operating in response to the work order and said command, and browser software for browsing and interacting with web pages.

3. The crew management system of claim 2, wherein said mobile field unit (52) further comprises a sound creation device (88), said sound creation device generating a sound upon receipt of said command.

4. The crew management system of claim 3, wherein said sound notifies the field crew that the work order has been assigned.

5. The crew management system of claim 3, wherein said sound is selected from a plurality of recorded sounds stored on said mobile field unit (52).

6. The crew management system of claim 2, wherein said mobile field unit (52) in response to said command generates a message on said display.

7. The crew management system of claim 1, wherein said file is an HTML file (92) containing a link to data on said enterprise computing system (50) related to the work order or command.

8. The crew management system of claim 7, wherein said enterprise computing system (50) comprises a data server (60) for providing data to said mobile field unit (52), said data server (60) upon receiving a request for data in response to said link being accessed at said mobile field unit (52), transmits data to said mobile field unit (52).

9. The crew management system of claim 8, wherein said data server (60) is an HTTP server and upon receiving a request for data in response to said link being accessed at said mobile field unit (52), said HTTP server transmits at least one HTML file to said mobile unit (52).

10. The crew management system of claim 9, wherein said at least one HTML file (92) comprises links to additional data related to the work order.

11. The crew management system of claim 9, wherein said data server (60) transmits to said mobile field unit (52) map data corresponding to said work order.

12. The crew management system of claim 11, wherein said map data comprises at least one map file, said map file being displayable by said web browser (90).

13. The crew management system of claim 11, wherein said map file comprises at least one link to additional data.

14. The crew management system of claim 1, further comprising a monitoring server (62), said monitoring server (62) comprising a work order database of data related to the status of the transmission of work orders to field crews.

15. The crew management system of claim 1, wherein said wireless communication network (54) supports TCP/IP communication protocol.

16. A method for managing a field crew using a system having an enterprise computing system (50) and at least one mobile field unit (52), **characterized in that** it comprises the following steps:
a) storing (110) in a database (82) on the enterprise computing system (50) an entry indicating that a work order has been assigned to the field crew;
b) transmitting (112) to the field unit (52) a first data file (92) of data related to the work order and a command to launch a web browser,
c) at the field unit (52), launching (114) a web browser (90) and loading the web browser (90) with said first data file (92);
d) in response to input to the web browser (90) by the field crew, transmitting (116) a request to the enterprise computing system (50) for additional data regarding the work order,
e) at the enterprise computing system (50), in response to the request from the mobile unit (52), retrieving (118) a second data file, and
f) transmitting (120) to the mobile field unit (52) said second data file.

17. The method of claim 16, further comprising the step of automatically generating at least one map file containing map data related to the work order.

18. The method of claim 16, wherein said first data file (92) is an HTML file containing at least one link to said second data file.

19. The method of claim 17, wherein said second data file is said map file.

20. The method of claim 17 wherein said at least one map file comprises an HTML file (148) and a second map file (146) wherein the HTML file has an embedded link to the second map file (146) and said second map file (146) comprises a plurality of map object and a unique identifier for each of plurality of map objects, said method further-comprising the steps of:
loading (202) the HTML file (148) in said web browser (90);
detecting the embedded link;
displaying (206) the contents of the second map file (146);
upon selection by field crew of one of the plurality of map objects, transmitting (208) a request along with the unique identifier for the selected map object to the enterprise computing system (50) for data regarding the map object;
at the enterprise computing system (50), in response to the request from the mobile unit (52) for data regarding the selected map object, retrieving (210) secondary map data related to the map object,
transmitting (212) the secondary map data to the mobile field unit (52), and
loading (214) the secondary map data in the web browser (90).

21. The method of claim 20, wherein the second map file is MIME type file.

22. The method of claim 21, wherein the step of displaying (206) the contents of the second map file further comprises the steps of:
loading a web browser plug-in (94) into the web browser (90);
displaying in a map area of the web browser (90) the map objects in the second map file using the web browser plug-in (94).

23. The method of claim 22 wherein the web browser plug-in (94) maintains a list in memory of object identifiers for the map objects in the second map file (146).

24. The method of claim 23 wherein the web browser plug-in (94) is operable to receive click events on map objects in the map area and search the list in memory of object identifiers for the object identifier corresponding to a map object that has been clicked upon.

25. The method of claim 20, wherein the HTML file (148) comprises a uniform resource locator (URL) that points to a program on the enterprise computing system (50) for retrieving secondary map data.

26. The method of claim 25, wherein the plug-in (94) stores in memory the uniform resource locator, said step of transmitting (208) a request along with the unique identifier for the selected map object to the enterprise computing system (50) for data regarding the map object, further comprising the steps of:
retrieving from memory the unique identifier for the selected map object;
encoding the unique identifier with the uniform resource locator in a secondary map data request; and
transmitting the secondary map data request to the enterprise computing system (50).

27. The method of claim 20, wherein the step of retrieving (210) secondary map data related to the map object, further comprises the following steps:
locating the uniform resource locator;
invoking a program for retrieving secondary map data.

28. The method of claim 20, wherein the secondary map data comprises a map data retrieval HTML file having a plurality of links each of which points to a uniform resource locator and program which generates specialized map data for a specified map object identifier.

29. The method of claim 28, wherein one of said plurality of links points to a uniform resource locator and program for generating a list of customers associated with a specified object.

30. The method of claim 28, wherein one of said plurality of links points to a uniform resource locator and program for generating a list of objects from an inventory database, said list indicating availability of an object.

31. The method of claim 28, wherein one of said plurality of links points to a uniform resource locator and program for generating a form for performing a plurality of status update operations related an object.

32. The method of claim 31, wherein one of said plurality of status update operations is repair.

33. The method of claim 31, wherein one of said plurality of status update operations is replace.

34. The method of claim 31, wherein one of said plurality of status update operations is close.

35. The method of claim 31, wherein one of said plurality of status update operations is open.

36. The method of claim 31, wherein one of said plurality of status update operations is remove.

## Patentansprüche

1. Ein Crewmanagementsystem zur Erteilung eines Arbeitsauftrags an eine geographisch verteilte Außeneinsatzeinheit bestehend aus:
einem drahtlosen Kommunikationsnetz (54);
einem Unternehmenscomputersystem (50), das mit dem genannten Drahtlosnetz (54) in Kommunikation ist, wobei das genannte Unternehmenscomputersystem (50) in der Lage ist, einer Außeneinsatzeinheit den Arbeitsauftrag zuzuteilen, einen mit dem Arbeitsauftrag verbundenen Befehl zu erteilen, und Feldanfragen nach Daten in Verbindung mit dem Arbeitsauftrag zusammenzustellen; sowie
einer mobilen Feldeinheit (52), die mit dem genannten Drahtlosnetz (54) in Kommunikation ist, wobei die genannte Feldeinheit (52) in der Lage ist, den genannten Befehl und den Arbeitsauftrag zu empfangen und vom genannten Unternehmenscomputersystem (50) Daten in Verbindung mit dem Arbeitsauftrag anfordern kann, **dadurch gekennzeichnet, dass** der genannte Befehl eine Datei (92) mit Daten, die sich auf den Arbeitsauftrag beziehen, sowie einen Befehl zum Starten eines Web-Browsers (90) umfasst, wobei die genannte mobile Feldeinheit (52) in Reaktion auf den genannten Befehl, veranlasst, dass der genannte Web-Browser (90) startet und die genannte Datei (92) der Daten, die sich auf den Arbeitsauftrag beziehen, lädt.

2. Das Crewmanagementsystem gemäß Anspruch 1, wobei die genannte mobile Feldeinheit (52) ein Display zu Anzeige der Information, Server-Software zum empfang und Betrieb in Reaktion auf den Arbeitsauftrag und den genannten Befehl sowie Browser-Software zum Browsen und zur Interaktion mit den Web-Seiten aufweist.

3. Das Crewmanagementsystem gemäß Anspruch 2, wobei die genannte mobile Feldeinheit (52) zudem ein Tonerzeugungsgerät (88) umfasst, wobei das genannte Tonerzeugungsgerät bei Erhalt des genannten Befehlt einen Ton erzeugt.

4. Das Crewmanagementsystem gemäß Anspruch 3, wobei der genannte Ton die Außeneinsatzeinheit informiert, dass der Arbeitsauftrag zugeteilt wurde.

5. Das Crewmanagementsystem gemäß Anspruch 3, wobei der genannte Ton aus einer Reihe von aufgenommenen Tönen, die auf der mobilen Feldeinheit (52) gespeichert sind, ausgewählt wird.

6. Das Crewmanagementsystem gemäß Anspruch 2, wobei die genannte mobile Feldeinheit (52) in Reaktion auf den genannten Befehl eine Nachricht auf dem Display erzeugt.

7. Das Crewmanagementsystem gemäß Anspruch 1, wobei es sich bei der genannten Datei um eine HTML-Datei (92) handelt, die ein Link zu den Daten auf dem genannten Unternehmenscomputersystem (50) enthält, die sich auf den Arbeitsauftrag oder Befehl beziehen.

8. Das Crewmanagementsystem gemäß Anspruch 7, wobei das genannte Unternehmenscomputersystem (50) einen Datenserver (60) zur Bereitstellung von Daten an die genannten mobile Feldeinheit (52) umfasst, und der genannte Datenserver (60) nach Erhalt einer Anfrage nach Daten in Reaktion darauf, dass das genannte Link an der genannten mobilen Feldeinheit (52) angegangen wird, Daten an die genannte mobile Feldeinheit (52) überträgt.

9. Das Crewmanagementsystem gemäß Anspruch 8, wobei es sich bei dem genannten Datenserver (60) um einen HTTP-Server handelt und dieser genannte HTTP-Server nach Erhalt einer Anfrage nach Daten in Reaktion darauf, dass das genannte Link an der genannten mobilen Feldeinheit (52) angegangen wurde, zumindest eine HTML-Datei an die genannte mobile Feldeinheit (52) überträgt.

10. Das Crewmanagementsystem gemäß Anspruch 9, wobei die zumindest eine genannte HTML-Datei (92) Links zu zusätzlichen Daten, die sich auf den Arbeitsauftrag beziehen, enthält.

11. Das Crewmanagementsystem gemäß Anspruch 9, wobei der genannte Datenserver (60) an die genannte mobile Feldeinheit (52) Kartendaten überträgt, die dem genannten Arbeitsauftrag entsprechen.

12. Das Crewmanagementsystem gemäß Anspruch 11, wobei die genannten Kartendaten mindestens eine Kartendatei enthalten und diese genannte Kartendatei durch den genannten Web-Browser (90) angezeigt werden kann.

13. Das Crewmanagementsystem gemäß Anspruch 11, wobei die genannte Kartendatei zumindest ein Link zu zusätzlichen Daten enthält.

14. Das Crewmanagementsystem gemäß Anspruch 1, das zudem einen Überwachungsserver (62) enthält, wobei der genannte Überwachungsserver (62) eine Arbeitsauftragsdatenbank in Bezug auf den Status der Übertragung von Arbeitsaufträgen an Außeneinsatzeinheiten enthält.

15. Das Crewmanagementsystem gemäß Anspruch 1, wobei das genannte drahtlose Kommunikationsnetz (54) TCP/IP-Kommunikationsprotokoll unterstützt.

16. Ein Verfahren zum Management einer Außeneinsatzeinheit, die ein System verwendet, das ein Unternehmenscomputersystem (50) und zumindest eine mobile Feldeinheit (52) aufweist und **dadurch gekennzeichnet ist, dass** es die folgenden Schritte umfasst:
a) Speichern (110) einer Eingabe in einer Datenbank (82) auf dem Unternehmenscomputersystem (50), die anzeigt, dass der Arbeitsauftrag der Außeneinsatzeinheit zugeteilt wurden;
b) Übertragen (112) einer ersten Datendatei (92) der auf den Arbeitsauftrag bezogenen Daten und eines Befehls zum Starten eines Web-Browsers an die Feldeinheit (52);
c) Starten (114) eines Web-Browsers (90) an der Feldeinheit (52) und Laden des Web-Browsers (90) mit der genannten ersten Datendatei (92);
d) Übertragen (116) einer Anfrage an das Unternehmenscomputersystem (50) nach zusätzlichen Daten in Verbindung mit dem Arbeitsauftrag in Reaktion auf eine Eingabe in den Web-Browser (90) durch die Außeneinsatzeinheit;
e) Abruf (118) einer zweiten Datendatei am Unternehmenscomputersystem (50) in Reaktion auf die Anfrage von der mobilen Einheit (52), sowie
f) Übertragen (120) der genannten zweiten Datendatei an die mobile Feldeinheit (52).

17. Das Verfahren gemäß Anspruch 16, das zudem den Schritt der automatischen Erstellung von mindestens einer Kartendatei umfasst, die mit dem Arbeitsauftrag verbundene Kartendaten enthält.

18. Das Verfahren gemäß Anspruch 16, wobei es sich bei der genannten ersten Datendatei (92) um eine HTML-Datei handelt, die zumindest ein Link zu genannten zweiten Datendatei enthält.

19. Das Verfahren gemäß Anspruch 17, wobei es sich bei der genannten zweiten Datendatei um die genannte Kartendatei handelt.

20. Das Verfahren gemäß Anspruch 17, bei dem die genannte zumindest eine Kartendatei eine HTML-Datei (148) und eine zweite Kartendatei (146) enthält, wobei die HTML-Datei ein eingebettetes Link zur zweiten Kartendatei (146) aufweist und die genannte zweite Kartendatei (146) mehrere Kartenobjekte sowie einen einzigartigen Identifizierer für jedes der mehreren Kartenobjekte aufweist, wobei das genannte Verfahren zudem folgende Schritte umfasst:
Laden (202) der HTML-Datei (148) in den genannten Web-Browser (90);
Feststellen des eingebetteten Links;
Anzeige (206) des Inhalts der zweiten Kartendatei (146);
nach Wahl eines der mehreren Kartenobjekte durch die Außeneinsatzeinheit Übertragen (208) einer Anfrage zusammen mit dem einzigartigen Identifizierer für das gewählte Kartenobjekt nach Daten hinsichtlich des Kartenobjekts an das Unternehmenscomputersystem (50);
Abruf (210) von mit dem Kartenobjekt verbundenen sekundären Kartendaten im Unternehmenscomputersystem (50) in Reaktion auf die Anfrage der mobilen Einheit (52) nach Daten zum gewählten Kartenobjekt;
Übertragen (212) der sekundären Kartendaten an die mobile Feldeinheit (52) sowie
Laden (214) der sekundären Kartendaten in den Web-Browser (90).

21. Das Verfahren gemäß Anspruch 20, wobei es sich bei der zweiten Kartendatei um eine Datei vom Typ MIME handelt.

22. Das Verfahren gemäß Anspruch 21, wobei der Schritt der Anzeige (206) des Inhalts der zweiten Kartendatei zudem die folgenden Schritte umfasst:
Laden eines Web-Browser-Plug-Ins (94) in den Web-Browser (90);
Anzeige der Kartenobjekte in der zweiten Kartendatei in einem Kartenbereich des Web-Browsers (90) unter Verwendung des Web-Browser-Plug-Ins (94).

23. Das Verfahren gemäß Anspruch 22, wobei das Web-Browser-Plug-In (94) eine Liste im Speicher von Objektidentifizierern für die Kartenobjekte in der zweiten Kartendatei (146) unterhält.

24. Das Verfahren gemäß Anspruch 22, wobei das Web-Browser-Plug-In (94) so eingesetzt werden kann, dass es Click Events über Kartenobjekte im Kartenbereich empfängt und die Liste im Speicher der Objektidentifizierer für den Objektidentifizierer durchsucht, der einem Kartenobjekt, auf dem geklickt wurde, entspricht.

25. Das Verfahren gemäß Anspruch 20, wobei die HTML-Datei (148) einen einheitlichen Ressourcenzeiger (URL) enthält, der zum Abruf von sekundären Kartendaten auf ein Programm im Unternehmenscomputersystem (50) weist.

26. Das Verfahren gemäß Anspruch 25, wobei das Plug-In (94) im Speicher des einheitlichen Ressourcenzeigers den genannten Schritt des Übertragens (208) einer Anfrage zusammen mit einem einzigartigen Identifizierer an das Unternehmenssystem (50) nach Daten über das Kartenobjekt speichert, zu dem weiter folgende Schritte gehören:
Abruf des einzigartigen Identifizierers für das gewählte Kartenobjekt aus dem Speicher;
Codieren des einzigartigen Identifizierers mit dem einheitliche Ressourcenzeiger in der Anfrage nach sekundären Kartendaten; und
Übertragen der Anfrage nach sekundären Daten an das Unternehmenscomputersystem (50).

27. Das Verfahren gemäß Anspruch 20, wobei der Schritt des Abrufs (210) sekundärer Kartendaten in Verbindung mit dem Kartenobjekt zudem die folgenden Schritte umfasst:
Auffinden des einheitlichen Ressourcenzeigers;
Aufrufen eines Programms zwecks Abrufs der sekundären Kartendaten.

28. Das Verfahren gemäß Anspruch 20, wobei die sekundären Kartendaten eine Kartendatenabruf-HMTL-Datei umfassen, die mehrere Links aufweist, die jeweils auf einen einheitlichen Ressourcenzeiger und ein Programm weisen, das spezielle Kartendaten für einen spezifischen Kartendatenidentifizierer erzeugen.

29. Das Verfahren gemäß Anspruch 28, wobei eines der mehreren Links auf einen einheitlichen Ressourcenzeiger und ein Programm zur Erzeugung einer mit einem spezifischen Objekt assoziierten Kundenliste weist.

30. Das Verfahren gemäß Anspruch 28, wobei eines der mehreren Links auf einen einheitlichen Ressourcenzeiger und ein Programm zur Erzeugung einer Objektliste aus einer Inventardatenbasis weist, wobei die genannte List die Verfügbarkeit eines Objekts angibt.

31. Das Verfahren gemäß Anspruch 28, wobei eines der mehreren Links auf einen einheitlichen Ressourcenzeiger und ein Programm zur Erzeugung eines Formblatts zur Durchführung mehrerer Statusaktualisierungen in Bezug auf ein Objekt weist.

32. Das Verfahren gemäß Anspruch 31, wobei eine der mehreren Statusakutalisierungen Reparatur ist.

33. Das Verfahren gemäß Anspruch 31, wobei eine der mehreren Statusakutalisierungen Austausch ist.

34. Das Verfahren gemäß Anspruch 31, wobei eine der mehreren Statusakutalisierungen Schießen ist.

35. Das Verfahren gemäß Anspruch 31, wobei eine der mehreren Statusakutalisierungen Öffnen ist.

36. Das Verfahren gemäß Anspruch 31, wobei eine der mehreren Statusakutalisierungen Ausbau ist.

## Revendications

1. Un système de gestion d'équipe destiné à la distribution d'ordres de fabrication à une équipe sur le terrain répartie géographiquement, comprenant :
un réseau de communication sans fil (54)
un système informatique d'entreprise (50) en communication avec ledit réseau sans fil (54), ledit système informatique d'entreprise (50) étant en opérabilité pour assigner l'ordre de fabrication à une équipe sur le terrain, pour lancer une commande liée à l'ordre de fabrication, et des requêtes de travail sur le terrain liées à l'ordre de fabrication ; et
une unité mobile sur le terrain (52) en communication avec ledit réseau sans fil (54), ladite unité mobile sur le terrain (52) étant en opérabilité pour recevoir ladite commande et l'ordre de fabrication et étant en opérabilité pour demander audit système informatique d'entreprise (50) des données liées à l'ordre de fabrication, **caractérisé en ce que** ladite commande comprend un fichier (92) de données lié à l'ordre de fabrication et une commande de lancement d'un navigateur Internet (90), ladite unité mobile sur le terrain (52) en réponse à ladite commande causant ledit navigateur Internet (90) à exécuter et à charger avec ledit fichier (92) des données liées à l'ordre de fabrication.

2. Système de gestion d'équipe de la revendication 1, dans lequel ladite unité mobile sur le terrain (52) est dotée d'un affichage pour l'affichage d'informations, d'un logiciel de serveur pour une réception et une exécution en réponse à l'ordre de fabrication et à ladite commande, et d'un logiciel de navigateur pour une navigation et une interaction avec les pages Internet.

3. Système de gestion d'équipes de la revendication 2, dans lequel ladite unité mobile sur le terrain (52) est en outre dotée d'un dispositif de création de son (88), ledit dispositif de création de son générant un son à la réception de ladite commande.

4. Système de gestion d'équipe de la revendication 3, dans lequel ledit son notifie à l'équipe sur le terrain que l'ordre de fabrication a été assigné.

5. Système de gestion d'équipe selon la revendication 3, dans lequel ledit son est sélectionné parmi une pluralité de sons enregistrés, stockés sur ladite unité mobile sur le terrain (52).

6. Système de gestion d'équipe de la revendication 2, dans lequel ladite unité mobile sur le terrain (52) génère un message sur ledit affichage en réponse à ladite commande.

7. Système de gestion d'équipe de la revendication 1, dans lequel ledit fichier est un fichier HTML (92) contenant un lien aux données liées à l'ordre de fabrication ou à la commande stockées dans ledit système informatique d'entreprise (50).

8. Système de gestion d'équipe de la revendication 7, dans lequel ledit système informatique d'entreprise (50) comprend un serveur de données (60) pour la fourniture de données à ladite unité mobile sur le terrain (52), ledit serveur de données (60) lors de la réception d'une requête de données en réponse audit lien faisant l'objet d'un accès au niveau de ladite unité mobile sur le terrain (52), transmettant des données à ladite unité mobile sur le terrain (52).

9. Système de gestion d'équipe de la revendication 8, dans lequel ledit serveur de données (60) est un serveur HTTP et lors de la réception d'une requête de données en réponse audit lien faisant l'objet d'un accès au niveau de ladite unité mobile sur le terrain (52), ledit serveur transmet au moins un fichier HTML à ladite unité mobile sur le terrain (52).

10. Système de gestion d'équipe de la revendication 9, dans lequel ledit au moins un fichier HTML (92) contient des liens avec des données supplémentaires liées à l'ordre de fabrication.

11. Système de gestion d'équipe de la revendication 9, dans lequel ledit serveur de données transmet (60) à ladite unité mobile sur le terrain (52) des données de cartes géographiques correspondant audit ordre de fabrication.

12. Système de gestion d'équipe de la revendication 11, dans lequel lesdites données de cartes géographiques comprennent au moins un fichier de cartes géographiques, ledit fichier de cartes géographiques étant affichable par ledit navigateur Internet (90)

13. Système de gestion d'équipe de la revendication 11, ledit fichier de cartes géographiques contenant au moins un lien à des données supplémentaires.

14. Système de gestion d'équipe de la revendication 1, comprenant en outre un serveur de surveillance (62), ledit serveur de surveillance (62) étant doté d'une base de données d'ordres de fabrication contenant les données liées au statut de transmission des ordres de fabrication assignés à l'équipe sur le terrain.

15. Système de gestion d'équipe de la revendication 1, ledit réseau de communication sans fil (54) supportant un protocole de communication TCP/IP.

16. Procédé de gestion d'une équipe sur le terrain utilisant un système doté d'un système informatique d'entreprise (50) et d'au moins une unité mobile sur le terrain (52), **caractérisé en ce qu'**il comprend les étapes suivantes :
a) stockage (110) dans une base de données (82) du système informatique d'entreprise (50) d'une entrée indiquant qu'un ordre de fabrication a été assigné à l'équipe sur le terrain ;
b) transmission (112) à l'unité sur le terrain (52) d'un premier fichier de données (92) contenant des données liées à l'ordre de fabrication et d'une commande de lancement d'un navigateur Internet,
c) au niveau de l'unité sur le terrain (52), lancement (114) d'un navigateur Internet (90) et chargement dudit premier fichier de données (92) dans le navigateur Internet (90) ;
d) en réponse à l'entrée faite dans le navigateur Internet (90) par l'équipe sur le terrain, transmission (116) au système informatique d'entreprise (50) d'une requête de données supplémentaires concernant l'ordre de fabrication;
e) au niveau du système informatique d'entreprise (50), extraction (118) d'un deuxième fichier de données en réponse à la demande de l'unité mobile (52), et
f) transmission (120) à l'unité mobile sur le terrain (52) dudit deuxième fichier de données.

17. Procédé de la revendication 16, consistant en outre de l'étape de génération automatique d'au moins un fichier de cartes géographiques contenant des données de cartes géographiques liées à l'ordre de fabrication.

18. Procédé de la revendication 16, dans lequel ledit premier fichier de données (92) est un fichier HTML contenant au moins un lien audit deuxième fichier de données.

19. Procédé de la revendication 17, dans lequel ledit deuxième fichier de données est ledit fichier de cartes géographiques.

20. Procédé de la revendication 17, dans lequel au moins un fichier de cartes géographiques contient un fichier HTML (148) et un deuxième fichier de cartes géographiques (146) dans lequel le fichier HTML a un lien imbriqué au deuxième fichier de données géographiques (146) et ledit deuxième fichier de données géographiques (146) contient une pluralité d'objets de cartes géographiques et un identifiant unique pour chaque pluralité d'objets de cartes géographiques, ledit procédé comportant en outre les étapes de :
chargement (202) du fichier HTML (148) dans ledit navigateur Internet (90) ;
détection du lien imbriqué ;
affichage (206) du contenu du deuxième fichier de cartes géographiques (146) ;
lors de la sélection par l'équipe sur le terrain de la pluralité d'objets de cartes géographiques, transmission (208) au système informatique d'entreprise (50) d'une requête de données relative à l'objet de carte géographique ainsi que l'identifiant unique de l'objet de carte géographique sélectionné ;
au niveau du système informatique d'entreprise (50), en réponse à la requête de données relative à l'objet de carte géographique sélectionné émanant de l'unité mobile (52), extraction (210) de données de cartes géographiques secondaires liées à l'objet de carte géographique,
transmission (212) des données de cartes géographiques secondaires à l'unité mobile sur le terrain (52), et
chargement (214) des données de cartes géographiques secondaires dans le navigateur Internet (90).

21. Procédé selon la revendication 20, dans lequel le deuxième fichier de cartes géographiques est un fichier de type MIME.

22. Procédé selon la revendication 21, dans lequel l'étape d'affichage (206) du contenu du deuxième fichier de cartes géographiques comprend en outre les étapes suivantes :
chargement d'un module d'extension du navigateur Internet (94) dans le navigateur Internet (90) ;
affichage dans une zone de stockage de cartes géographiques du navigateur Internet (90) des objets de cartes géographiques contenus dans le deuxième fichier de cartes géographiques en utilisant le module d'extension du navigateur Internet (94) ;

23. Procédé de la revendication 22, dans lequel le module d'extension du navigateur Internet (94) maintient une liste en mémoire des identifiants d'objets pour les objets de cartes géographiques contenus dans le deuxième fichier de cartes géographiques (146).

24. Procédé de la revendication 23, dans lequel le module d'extension du navigateur Internet (94) est en opérabilité pour recevoir des événements à cliquer sur des objets de cartes géographiques dans la zone de stockage des cartes géographiques et pour rechercher dans la mémoire la liste des identifiant d'objets pour l'identifiant d'objet correspondant à un objet de cartes géographiques cliqué.

25. Procédé de la revendication 20, dans lequel le fichier HTLM (148) contient un localisateur de ressources uniforme (URL pour *uniform resource locator*) qui pointe sur un programme dans le système informatique d'entreprise (50) de manière à extraire des données de cartes géographiques secondaires.

26. Procédé de la revendication 25, dans lequel le module d'extension (94) stocke en mémoire le localisateur de ressources uniforme, ladite étape de transmission (208) au système informatique d'entreprise (50) d'une requête de données relatives à l'objet de carte géographique ainsi que l'identifiant unique de l'objet de carte géographique sélectionné, comprenant en outre les étapes de:
extraction de la mémoire de l'identifiant unique de l'objet de carte géographique sélectionné ;
codage de l'identifiant unique avec le localisateur de ressources uniforme dans une requête de données de cartes géographiques secondaires ; et
transmission de la requête de données de cartes géographiques secondaires au système informatique de l'entreprise (50).

27. Procédé de la revendication 20, dans lequel l'étape d'extraction (210) des données de cartes géographiques secondaires relatives à l'objet de carte géographique, comprend en outre les étapes suivantes :
localisation du localisateur de ressources uniforme ;
invocation d'un programme pour l'extraction des données de cartes géographiques secondaires.

28. Procédé de la revendication 20, dans lequel les données de cartes géographiques secondaires contiennent un fichier HTML d'extraction de données de cartes géographiques contenant une pluralité de liens, chacun desquels pointe sur un localisateur de ressources uniforme et un programme qui génère des données de cartes géographiques spécialisées pour un identifiant d'objet de carte géographique spécifié.

29. Procédé de la revendication 28, dans lequel l'un de ladite pluralité de liens pointe sur un localisateur de ressources uniforme et un programme générant une liste de clients associés à l'objet spécifié.

30. Procédé de la revendication 28, dans lequel l'un de la pluralité de liens pointe sur un localisateur de ressources uniforme et un programme pour générer une liste d'objets à partir de la base de données de l'inventaire, ladite liste signalant la disponibilité d'un objet.

31. Procédé de la revendication 28, dans lequel l'un de ladite pluralité de liens pointe sur un localisateur de ressources uniforme et un programme pour la génération d'un formulaire en vue de la réalisation d'une pluralité d'opérations de mise à jour de statut liées à un objet.

32. Procédé de la revendication 31, dans lequel l'une de ladite pluralité d'opérations de mise à jour du statut est une réparation.

33. Procédé de la revendication 31, dans lequel l'une de ladite pluralité d'opérations de mise à jour du statut est un remplacement.

34. Procédé de la revendication 31, dans lequel l'une de ladite pluralité d'opérations de mise à jour du statut est une fermeture.

35. Procédé de la revendication 31, dans lequel l'une de ladite pluralité d'opérations de mise à jour du statut est une ouverture.

36. Procédé de la revendication 31, dans lequel l'une de ladite pluralité d'opérations de mise à jour du statut est une suppression.
